# EUROPÄISCHE PATENTSCHRIFT

(11) **EP 2 751 446 B1**
(45) Veröffentlichungstag und Bekanntmachung des Hinweises auf die Patenterteilung: **20.05.2015**
(21) Anmeldenummer: 12740897.9
(22) Anmeldetag: 27.07.2012
(51) Int. Cl.: F16F 13/00, B60G 11/62, B60G 11/56, F16F 9/05, F16F 15/04

(54) **LUFTFEDERVORRICHTUNG FÜR EIN KRAFTFAHRZEUG**
PNEUMATIC SPRING DEVICE FOR A MOTOR VEHICLE
DISPOSITIF DE SUSPENSION PNEUMATIQUE POUR VEHICULE AUTOMOBILE

(30) Priorität: 01.09.2011 DE 102011112130
(43) Veröffentlichungstag der Anmeldung: 09.07.2014
(73) Patentinhaber: Audi AG, 85045 Ingolstadt (DE)
(72) Erfinder: WILLEMS, Marco, 85053 Ingolstadt (DE)
(86) Internationale Anmeldenummer: PCT/EP2012/003201
(87) Internationale Veröffentlichungsnummer: WO 2013/029725

(56) Entgegenhaltungen:
- EP-A1- 1 475 255
- EP-A2- 1 249 357
- WO-A1-2004/109149
- DE-A1- 19 651 138
- DE-A1-102006 046 559
- DE-A1-102007 052 739
- DE-A1-102010 026 002

## Beschreibung

Die Erfindung betrifft eine Luftfedervorrichtung für ein Kraftfahrzeug nach dem Oberbegriff des Anspruchs 1.

Eine gattungsgemäße Luftfedervorrichtung umfasst eine allgemein bekannte Luftfeder, welche aus einem Abrollkolben und einem dazu axial verlagerbaren Luftfederdeckel besteht sowie aus einem dazwischen angeordneten Elastomerbalg als Rollbalg mit einem eingeschlossenen, komprimierbaren Luftvolumen. Die Federwirkung einer solchen Luftfeder basiert auf der Komprimierung von Luft im abgeschlossenen Luftvolumen, wobei durch Abrollen des Rollbalgs das Luftvolumen während des Einfedervorgangs verkleinert wird. Dadurch steigt der Luftdruck im Luftvolumen an, was in Kombination mit der wirksamen Fläche der Luftfeder zu einer Federkraft führt.

Nachteilig weist im Allgemeinen eine solche Luftfeder hinsichtlich des Anfederverhaltens bei kleinen Amplituden größerer Anregungsfrequenz ein verhärtendes Verhalten auf. Dieses Verhalten wird auch als Harshness beschrieben. Zudem werden als Rollbälge bei solchen Luftfedern regelmäßig sogenannte Kreuzlagenbälge eingesetzt, welche eine Eigentorsion aufweisen, welche zu einem Torsionsmoment in der Luftfeder führt. Nachteilig wirkt dieses Torsionsmoment auf die Achse als zusätzlicher Widerstand gegen das Einfedern. Dies führt zu einer Komfortverringerung bei so luftgefederten Fahrzeugen.

Eine solche Luftfeder ist z.B. aus der DE 10 2007 052 739 A1 bekannt.

Weiter ist eine Federvorrichtung eines Fahrwerks mit einer Kombination aus einem Federelement und einer Lageregelung bekannt, bei der ein Stoßdämpfer entfallen kann (DE 10 2004 010 301 A1). Spezielle Eigenschaften der vorstehend beschriebenen, gattungsgemäßen Luftfedervorrichtung sind hier nicht angegeben.

Aufgabe der Erfindung ist es, eine gattungsgemäße Luftfedervorrichtung so weiterzubilden, dass eine Steigerung des Komforts von damit luftgefederten Fahrzeugen erzielbar ist.

Diese Aufgabe wird dadurch gelöst, dass mit der Luftfeder wenigstens ein zusätzliches Federelement in Reihe geschaltet ist. Zudem ist eine Radiallagerung des Abrollkolbens und/oder des Luftfederdeckels als Torsionsausgleich integriert. Zentraler Bestandteil der Funktion der erfindungsgemäßen Luftfedervorrichtung ist somit die Überlagerung der Luftfeder durch die Reihenschaltung mit wenigstens einem zusätzlichen Federelement in Verbindung mit dem Torsionsausgleich. Durch die Reihenschaltung der Federelemente wird die gesamte Federrate reduziert und einer Verhärtung hinsichtlich des Anfederverhaltens entgegengewirkt. Weiter werden durch die Radiallagerung des Abrollkolbens und/oder des Luftfederdeckels Zwangsbewegungen des Rollbalgs, insbesondere Torsionsbewegungen eines Kreuzlagenbalgs kompensiert.

Bei der verwendeten Luftfeder kann in einer allgemein bekannten Ausführungsform der Rollbalg mit einem Ende mittels einer Deckelklemmung mit dem Luftfederdeckel verbunden sein. Mit dem anderen Ende ist der Rollbalg außenseitig mit dem auf den Luftfederdeckel hin gerichteten Abrollkolbenende mittels einer Kolbenklemmung verbunden. Bei einer Einfederung rollt somit der Rollbalg über der Außenseite des Abrollkolbens, wodurch das eingeschlossene Luftvolumen verkleinert und komprimiert wird. Als zusätzliches Federelement für die Reihenschaltung mit der Luftfeder können zum Erhalt der vorbeschriebenen Funktion grundsätzliche eine Vielzahl von allgemein bekannten Federelement-Ausführungen verwendet werden. Besonders geeignet sind Schraubenfedern oder Elastomerelemente.

Eine Federwegbegrenzung des Federelements kann einfach dadurch erhalten werden, dass als Einfederwegbegrenzung das Blockmaß des Federelements und als Ausfederwegbegrenzung wenigstens ein Axialanschlag verwendet werden.

Bei einer konkreten exemplarischen Ausführungsform einer Luftfedervorrichtung ist ein vorzugsweise achsseitig angeschlossener, zylindrischer Lagertopf vorgesehen, in dem der Abrollkolben axial bei Federvorgängen verlagerbar ist. Dabei ist der Abrollkolben durch ein an der Lagertopf-Innenwand angeordnetes Radiallager im Lagertopf gehalten und abgestützt. Zwischen dem Lagertopfboden und dem Abrollkolbenboden ist hier das Federelement, bevorzugt als Schraubenfeder eingesetzt. Die Ausfederwegbegrenzung ergibt sich dadurch, dass am Abrollkolben im unteren Bereich des Abrollkolbenbodens wenigstens ein radial abstehender Axialanschlag, vorzugsweise ein umlaufender Anschlagbund angeordnet ist, der zur Ausfederwegbegrenzung am Radiallager anschlägt.

In einer alternativen Ausführungsform kann die Funktion des in Reihe geschalteten zusätzlichen Federelements und die Funktion der Radiallagerung als Torsionsausgleich in einem Elastomerbauteil kombiniert sein, welches entsprechend der Bewegung des Abrollkolbens sowohl axial verformbar als auch für einen Torsionsausgleich tordierbar ist. Das Elastomerbauteil ist dazu so auszulegen, dass die Torsionsfederkonstante so klein ist, dass ein Torsionsausgleich ohne große Rückstellkraft insbesondere bei einem Kreuzlagenbalg möglich ist.

Anhand einer Zeichnung wird eine Ausführungsform einer Luftfedervorrichtung näher erläutert.

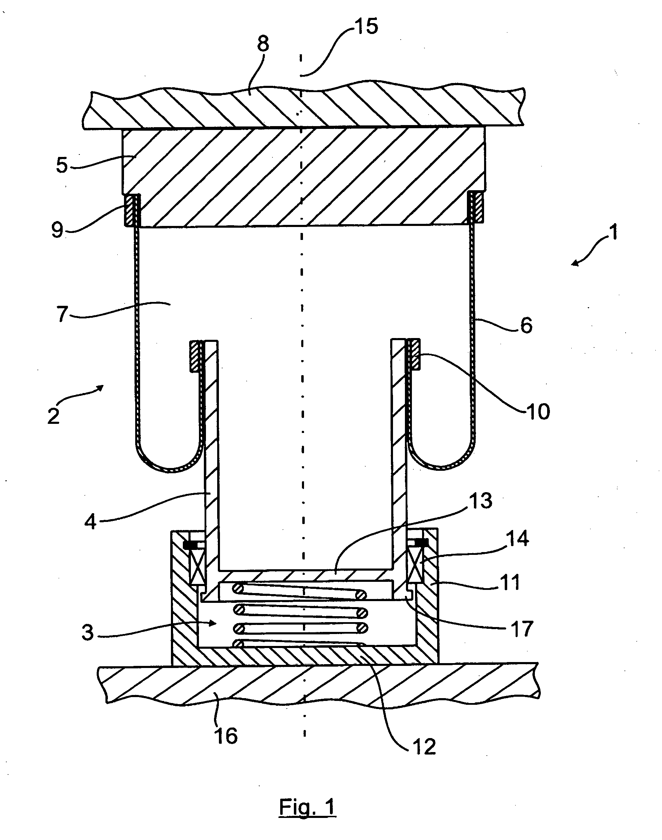

Die einzige Figur zeigt eine Luftfedervorrichtung 1 bestehend aus einer Luftfeder 2 mit einem zusätzlichen in Reihe geschalteten Federelement als Schraubenfeder 3.

Die Luftfeder 2 besteht aus einem Abrollkolben 4 und einem dazu axial verlagerbaren Luftfederdeckel 5 sowie einem dazwischen angeordneten Rollbalg 6 mit einem eingeschlossenen komprimierbaren Luftvolumen 7. Der Luftfederdeckel 5 ist hier an einem (schematisch dargestellten) Aufbauteil 8 angeschlossen.

Der Rollbalg 6 ist als Kreuzlagenbalg ausgebildet und mit seinem oberen Ende mittels einer Deckelklemmung 9 mit dem Luftfederdeckel 5 umlaufend verbunden. Das untere Ende des Rollbalgs 6 ist entsprechend mit einer Kolbenklemmung 10 mit dem oberen Abrollkolbenende verbunden.

Der untere Bereich des Abrollkolbens 4 ist in einem zylindrischen Lagertopf 11 axial beweglich aufgenommen und durch die Schraubenfeder 3 zwischen dem Lagertopfboden 12 und dem Abrollkolbenboden 13 axial abgestützt. Zudem ist der Abrollkolben 4 durch ein an der Lagertopfinnenwand angeordnetes Radiallager 14 radial gehalten und abgestützt. Das Radiallager 14 ist als Gleitlager ausgeführt, so dass der Abrollkolben 4 bei einem Einfedervorgang mit einer Federlängenverkürzung der Schraubenfeder 3 sowohl in den Lagertopf 11 einschiebbar als auch im Radiallager 14 für einen Torsionsausgleich des als Kreuzlagenbalg ausgeführten Rollbalgs 6 um die Lagerachse 15 verdrehbar ist. Der Lagertopf 11 ist hier mit einer (schematisch angedeuteten) Achse 16 eines Fahrwerks verbunden.

Eine Einfederwegbegrenzung des Abrollkolbens 4 im Lagertopf 11 ist durch das Blockmaß der Schraubenfeder 4 gegeben. Als Ausfederwegbegrenzung des Abrollkolbens 4 im Lagertopf 11 ist am unteren Ende des Abrollkolbens 4 ein Radial abstehender Axialanschlag 17 in der Art eines umlaufenden Anschlagbunds angeordnet, welcher zur Ausfederwegbegrenzung von unten her am Radiallager 14 anschlägt.

## Patentansprüche

1. Luftfedervorrichtung für ein Kraftfahrzeug, mit einer Luftfeder (2) bestehend aus einem Abrollkolben (4) und einem dazu axial verlagerbaren Luftfederdeckel (5) sowie einem dazwischen angeordneten Elastomerbalg als Rollbalg (6) mit einem eingeschlossenen, komprimierbaren Luftvolumen, wobei der als Kreuzlagenbalg ausgebildete Rollbalg (6) mit einem Ende mittels einer Deckelklemmung (9) mit dem Luftfederdeckel (5) verbunden ist und mit dem anderen Ende mit dem auf den Luftfederdeckel (5) hin gerichteten Ende des Abrollkolbens (4) mittels einer Kolbenklemmung (10) verbunden ist,
**dadurch gekennzeichnet,**
**dass** mit der Luftfeder (2) wenigstens ein zusätzliches Federelement (3) in Reihe geschaltet ist und eine Radiallagerung (14) des Abrollkolbens (4) als Torsionsausgleich integriert ist.

2. Luftfedervorrichtung nach Anspruch 1, **dadurch gekennzeichnet, dass** als zusätzliches Federelement eine Schraubenfeder (3) oder ein Elastomerelement verwendet ist.

3. Luftfedervorrichtung nach Anspruch 1 oder 2, **dadurch gekennzeichnet, dass** als Einfederwegbegrenzung das Blockmaß des Federelements (3) und als Ausfederwegbegrenzung wenigstens ein Axialanschlag (17) vorgesehen ist.

4. Luftfedervorrichtung nach einem der Ansprüche 1 bis 3, **dadurch gekennzeichnet, dass** ein vorzugsweise achsseitig angeschlossener, zylindrischer Lagertopf (11) vorgesehen ist, in dem der Abrollkolben (4) axial bei Federvorgängen verlagerbar ist und radial durch ein an der Lagertopf-Innenwand angeordnetes Radiallager (14) vorzugsweise als Gleitlager gehalten ist, und
dass zwischen dem Lagertopfboden (12) und dem Abrollkolbenboden (13) das Federelement, bevorzugt als Schraubenfeder (3), eingesetzt ist.

5. Luftfedervorrichtung nach Anspruch 4, **dadurch gekennzeichnet, dass** am Abrollkolben (4) wenigstens ein radial abstehender Axialanschlag (17), vorzugsweise ein umlaufender Anschlagbund, angeordnet ist, der zur Ausfederwegbegrenzung am Radiallager (14) anschlägt.

6. Luftfedervorrichtung nach einem der Ansprüche 1 bis 3, **dadurch gekennzeichnet, dass** die Funktion des in Reihe geschalteten zusätzlichen Federelements und die Funktion der Radiallagerung als Torsionsausgleich in einem Elastomerbauteil kombiniert ist, welches entsprechend der Bewegung des Abrollkolbens (4) sowohl axial verformbar als auch tordierbar ist.

## Claims

1. Pneumatic spring device for a motor vehicle, with a pneumatic spring (2) consisting of a rolling piston (4) and a pneumatic spring cover (5) that is displaceable axial to it, as well as elastomer bellows as rolling bellows (6) arranged between them with an enclosed, compressible air volume, whereby one end of the rolling bellows (6) designed as cross-layer bellows are attached to the pneumatic spring cover (5) with the help of a cover clamping (9) and the other end is attached to the end of the rolling piston (4) directed towards the pneumatic spring cover (5) with the help of a piston clamping (10),
**characterised in that**
at least one additional spring element (3) is connected in series with the pneumatic spring (2), and a radial bearing (14) of the rolling piston (4) is integrated as a torsional offset.

2. Pneumatic spring device according to claim 1, **characterised in that** a coil spring (3) or an elastomer element is used as an additional spring element.

3. Pneumatic spring device according to claim 1 or 2, **characterised in that** the block dimension of the spring element (3) is designed as the compression travel limitation and at least one axial stop (17) is designed as a rebound travel limitation.

4. Pneumatic spring device according to one of the claims 1 to 3, **characterised in that,** a cylindrical bearing cup (11) preferably connected on the axle side is designed in which the rolling piston (4) is axially displaceable during spring operations and is radially clamped, preferably as a slide bearing by a radial bearing (14) arranged on the inside wall of the bearing cup, and
the spring element, preferably as a coil spring (3), is used between the bearing cup base (12) and the rolling piston base (13).

5. Pneumatic spring device according to claim 4, **characterised in that,** at least one radially protruding axial stop (17), preferably a rotary stop collar, is arranged on the rolling piston (4), which strikes against the radial bearing (14) for the rebound travel limitation.

6. Pneumatic spring device according to one of the claims 1 to 3, **characterised in that,** the function of the additional spring element connected in series and the function of the radial bearing as a torsional offset is combined into an elastomer component, which is axially deformable as well as twistable in accordance with the movement of the rolling piston (4).

## Revendications

1. Dispositif de suspension pneumatique pour un véhicule automobile, comprenant un ressort pneumatique (2) constitué d'un piston de déroulement (4) et d'un couvercle de ressort pneumatique (5) pouvant être déplacé axialement par rapport audit piston de déroulement ainsi qu'un soufflet en élastomère, intercalé entre le piston de déroulement et le couvercle de ressort pneumatique, se présentant sous la forme d'un soufflet roulant (6) renfermant un volume d'air compressible, sachant que le soufflet roulant (6) réalisé sous la forme d'un soufflet à couches croisées est relié, par une extrémité, au moyen d'un système de serrage de couvercle (9), au couvercle de ressort pneumatique (5) et est relié, par l'autre extrémité, à l'extrémité, orientée vers le couvercle de ressort pneumatique (5), du piston de déroulement (4) au moyen d'un système de serrage de piston (10),
**caractérisé en ce**
**qu'**au moins un élément de ressort (3) supplémentaire est monté en série avec le ressort pneumatique (2), et en ce qu'un support radial (14) du piston de déroulement (4) est intégré sous la forme d'un système d'équilibrage de torsion.

2. Dispositif de suspension pneumatique selon la revendication 1, **caractérisé en ce qu'**on utilise en tant qu'élément de ressort supplémentaire un ressort hélicoïdal (3) ou un élément en élastomère.

3. Dispositif de suspension pneumatique selon la revendication 1 ou 2, **caractérisé en ce que** sont prévus, en tant que délimitation de course d'attaque, la dimension de l'élément de ressort (3) et, en tant que délimitation de course de détente, au moins une butée axiale (17).

4. Dispositif de suspension pneumatique selon l'une quelconque des revendications 1 à 3, **caractérisé en ce qu'**est prévue une cuvette de palier (11) cylindrique, de préférence raccordée côté axial, dans laquelle le piston de déroulement (4) peut être déplacé de manière axiale lors d'opérations d'amortissement et qui est maintenue de manière radiale par un palier radial (14), disposé au niveau de la paroi intérieure de la cuvette de palier, se présentant de préférence sous la forme d'un palier glissant, et
**en ce que** l'élément de ressort, se présentant de préférence sous la forme d'un ressort hélicoïdal (3), est inséré entre la partie inférieure de cuvette de palier (12) et la partie inférieure de piston de déroulement (13).

5. Dispositif de suspension pneumatique selon la revendication 4, **caractérisé en ce qu'**au moins une butée axiale (17) faisant saillie de manière radiale, de préférence une collerette de butée périphérique, est disposée au niveau du piston de déroulement (4), laquelle collerette de butée vient buter au niveau du palier radial (14) aux fins de la délimitation de course de détente.

6. Dispositif de suspension pneumatique selon l'une quelconque des revendications 1 à 3, **caractérisé en ce que** la fonction de l'élément ressort supplémentaire monté en série et la fonction du support radial faisant office de système d'équilibrage de torsion sont combinées dans un composant en élastomère, lequel peut être déformé de manière axiale tout comme il peut être tordu conformément au mouvement du piston de déroulement (4) .
